# EUROPEAN PATENT SPECIFICATION

(11) **EP 3 759 561 B1**
(45) Date of publication and mention of the grant of the patent: **10.07.2024**
(21) Application number: 19715265.5
(22) Date of filing: 28.02.2019
(51) Int. Cl.: G05D 1/00

(54) **DRONE CONTROL SYSTEM**
DROHNENSTEUERUNGSSYSTEM
SYSTÈME DE COMMANDE DE DRONE

(30) Priority: 01.03.2018 GB 201803371
(43) Date of publication of application: 06.01.2021
(73) Proprietor: SCOUTDI AS, 7462 Trondheim (NO)
(72) Inventor: JOHANSEN, Tor Arne, 7670 Inderøy (NO); KLAUSEN, Kristian, 1346 Gjettum (NO); FOSSEN, Thor Inge, 7030 Trondheim (NO); KVALØY, Pål, 7042 Trondheim (NO)
(74) Representative: LIGL IP Consult AS
(86) International application number: PCT/NO2019/050046
(87) International publication number: WO 2019/168410

(56) References cited:
- WO-A1-2016/033797
- US-B1- 9 739 881
- MICHAEL BRAASCH: "Obstacle avoidance: The challenge for drone package delivery", 21 December 2016 (2016-12-21), XP055862136, Retrieved from the Internet <URL:https://theconversation.com/obstacle-avoidance-the-challenge-for-drone-package-delivery-70241> [retrieved on 20211116]
- ANONYMOUS: "Echodyne's pocket-sized radar may be the next must-have tech for drones (and drone hunters) | TechCrunch", 12 May 2017 (2017-05-12), XP055862350, Retrieved from the Internet <URL:https://techcrunch.com/2017/05/12/echodynes-pocket-sized-radar-may-be-the-next-must-have-tech-for-drones-and-drone-hunters/?guccounter=1&guce_referrer=aHR0cHM6Ly93d3cuZ29vZ2xlLmNvbS8&guce_referrer_sig=AQAAAJgVFu5i7IG0iXog6_ADiGicKw2KnEVAE_vSuP4ISw8V5oUPz6Qy-qaHwy2jzMDkjPE9NLzA-294V5A6N-fyBiiANCfNQ9D> [retrieved on 20211117]
- CUI JIN Q ET AL: "Autonomous Navigation of UAV in Foliage Environment", JOURNAL OF INTELLIGENT AND ROBOTIC SYSTEMS, KLUWER DORDRECHT, NL, vol. 84, no. 1, 29 October 2015 (2015-10-29), pages 259 - 276, XP036118005, ISSN: 0921-0296, [retrieved on 20151029], DOI: 10.1007/S10846-015-0292-1

## Description

### TECHNICAL FIELD

The invention relates to a control system for a drone, and in particular to a control system for use with a multirotor type UAV. The invention also extends to associated drones, inspection systems, methods and software.

### BACKGROUND

The use of drones is increasing for numerous types of applications in various technical fields and in relation to both professional and amateur use. Drones are becoming very commonly used for tasks where it is required to inspect and/or photograph areas that are difficult to access either in terms of geographic location or in terms of physical accessibility by a person for manual inspection. This applies to many instances of inspection of industrial buildings and other objects, such as towers, chimneys, tank interiors, wind turbines (windmills), bridges and so on. For that kind of inspection a drone is used to inspect the state of the object via cameras or other sensors. For example, the drone may record or transmit photographs and/or video allowing for a remote visual inspection, or it may take measurements relating to the condition of the object. Typically such objects are generally stationary, although it is possible for a moving object to require inspection, such as a ship.

With most drone types it is an advantage to have some manner of automatic or semi-automatic control, such as for holding position or collision avoidance. It is possible for a human pilot to fully control a drone remotely, but this requires increased feedback to the pilot and is not a preferred solution due to difficult working environment for pilots, higher cost, safety issues, inspection data regularity/quality, and other factors. Automatic operation of almost all drones today relies on navigation aided by satellite navigation (GNSS) and magnetic compass. This is preferred where possible, although in some situations GNSS and magnetic compass can be unavailable or unreliable. This might occur during operations such as inspection of industrial sites, infrastructure, and indoor locations in general where satellite signal reception is denied or there is interference from metal structures and the like. In such cases, the currently available commercial/professional drone services depend on manual operation by a skilled pilot.

With the use of existing automation such as via GNSS and magnetic compass then drone functions that could either provide assistance in manual (semi automatic), automatic or autonomous flight include features such as:
- Collision avoidance; for example for autonomously overriding manual control or for an automatic mode,
- Fixed positioning and pointing relative to fixed objects,
- Fixed-distance scanning motions along smooth/regular surfaces, and
- Contact operations: maintaining contact with an object.

In relation to industrial inspection there is a regular need to operate very close to structures with high risk of collision, so drones used in that context should ideally have collision avoidance functions or be collision tolerant. There may be complex 3D structures requiring accurate control and navigation in vertical as well as horizontal directions. There can also be a need to have instruments in physical contact with the inspection surfaces. As a result these types of inspection operations create particular challenges for drone design as well as for the skill of the pilot. Efforts have been made to address these issues with computer-based sensor fusion and estimation methods in order to reduce effects of sensing noise and uncertainty, and to optimally combine the data from some combinations of sensors. In addition, work has been done with reference to new positioning and collision avoidance control algorithms. However, there remains a need for improvements in drone design, ideally paired with a reduction in the level of skill required from the pilot in order to allow more straightforward operation of the drones by less experienced operators in a greater range of conditions.

CUI JIN Q ET AL: "Autonomous Navigation of UAV in Foliage Environment", JOURNAL OF INTELLIGENT AND ROBOTIC SYSTEMS, KLUWER DORDRECHT, NL, vol. 84, no. 1, 29 October 2015 (2015-10-29), pages 259-276, XP036118005, ISSN: 0921-0296, DOI: 10.1007/S10846-015-0292-1 describes an unmanned drone comprising a navigation system and 2D lasers in a foliage environment.

### SUMMARY

The invention is defined by the appended claims.

The invention may have the advantage over prior art that it is able to track smaller and a larger number of objects and their velocity with respect to the drone. Further, the overall flight time may be increased due to lowered energy consumption, and tracking performance and state estimation of objects may be improved. This is beneficial for surveillance and mapping of object data as well as for ensuring safe flight of the drone.

The inventors have realised that with prior art drones there can be significant limitations from the use of satellite navigation and magnetic compass systems, in particular when the drone needs to be operated in a location where satellite navigation and/or magnetic compass systems cannot be relied upon and that to address this requires a switch away from such systems as the primary aid for automatic or aided flight of the drone, which is contrary to the prevailing view in this field. Many locations for tasks such as industrial inspection have low or no coverage for satellite navigation and at present this then requires manual piloting of the drone by a very skilled operator. The inventors have further realised that such locations also generally have physical objects close to the required area for flight of the drone and in fact that this is almost inevitably the case in situations where the use of satellite navigation and/or magnetic compass is impeded and where inspection of an object is required. Thus, it is proposed to use radar sensors to provide a drone control system for use in such circumstances, thereby allowing for accurate determination of position and velocity absent the use of satellite signals and often taking advantage of the same structures that impede the satellite signals to provide effective positioning via radar sensors.

The control system may determine the position and the velocity of the drone without reference to magnetic compass readings, i.e. making use of neither of satellite positioning signals or magnetic compass readings.

Inertial navigation systems may be used along with the radar sensors in order to provide more accurate determination of position and velocity for the drone. Both of radar and inertial navigation are inherently robust solutions with well-developed understanding of the basic principles.

The radar sensors may be sensors of relatively low spatial resolution that are small and inexpensive. For example, ultra wide band (UWB) impulse radar devices may be used, such as the XeThru X4 sensor supplied by Novelda AS of Norway, or alternatively the radar sensors may be pulsed systems or frequency-modulated continuous-wave (FMCW) systems as used in the automotive industry. The antennas for receiving the reflected radar signals may be suitable design to match the performance of the radar emitter. These may for example be directional antennas designed on a printed circuit board to achieve the required matching impedance, frequency response and directionality. These types of sensors can provide surveillance information with low spatial resolution but high range accuracy. The low size and cost makes it easy to use of several radars on the same drone to provide full 3D surveillance even for relatively lightweight drones. The accuracy of these sensors could be insufficient for imaging and mapping, but it is sufficient for determining position and velocity of the drone in relation to automatic control functions such as collision avoidance and distance control.

The control system includes a plurality of radar sensors for sensing objects around the drone in three dimensions around the drone. Thus, the plurality of radar sensors may be configured to be located on the drone so that they together cover all directions in three dimensions around the drone, i.e. radar coverage in each direction along three orthogonal axes, for example up, down, forward, back, left and right, with appropriate definition of those directions relative to an orientation of the drone. The radar sensors may be arranged with sensing axes aligned with such orthogonal axes and/or, there may be sensing axes aligned with diagonals in connection with the forward and/or rear directions of the drone, i.e. one or more of forward left, forward right, rearward left and rearward right. Alternatively, there may be more than one radar sensor for at least one axis of the orthogonal axes, such as two sensors with sensing regions covering overlapping areas around the axis. In one example there are at least six radar sensors configured such that there will be at least one sensor located and oriented on the drone to cover each of the six directions along the three orthogonal axes. Alternatively or additionally the sensors may include rotating radar sensors and/or radar sensors with multiple antennas in order to allow for a single sensor to detect objects in multiple directions. Additional sensors may be provided if required, depending on the angle and range covered by each of the sensors.

In some cases the control system includes radar sensors that cover all directions in three dimensions around the drone as well as other sensors configured to be located on the drone to augment the radar sensors and provide redundancy.

For example, distance measuring sensors such as laser based systems may be used to augment the upward and downward radar sensors. Although the drone operates absent satellite positioning it may be advantageous to augment the use of radar sensors by other sensor types, and so the control system can also make use of inertial measurement units, beacon positioning systems such as Ultra Wide Band radio beacons and/or other distance-based measurement such as laser based systems as mentioned above. For example, radio positioning assisted by several beacons may be used to calculate absolute position of the drone and reduce inertial navigation errors due to drift in the angular rate sensors and accelerometers. The controller may be arranged to perform a suitable fusion of the sensor data.

The control system includes multiple radar sensors. Using multiple radar sensors on a single vehicle can pose problems in some situations. The control system may therefore include features for mitigating interference between radars.

For example, the radar sensors may be configured to be placed with an appropriate spatial distribution on the drone, such that emitted beams of each radar sensor are arranged so that signals from a first radar sensor is unlikely to be received by the antenna of a second radar sensor. Alternatively, or additionally, the controller and the radar sensors may be configured for a temporal distribution of signals to avoid interference. Thus, the transmission time of each radar sensor may be timed so that only one radar sensor transmits pulses at any one time. Alternatively, or additionally, the controller and the radar sensors may be configured for signal separation and coding. In this case, by encoding the emitted beams for each radar sensor with different signals, then the receiver of the radar sensor can identify only the relevant received signals and reject transmissions from other radar sensors.

As well as issues arising from interference between multiple radar sensors, there may also be unwanted artefacts in the sensed signals due to internal reflections occurring at certain distances from the radar. A natural occurring phenomenon of many radar sensors is a band of internal reflections when measuring distances close to the radar such as distances below 1 m. The magnitude of this varies depending on, antenna design, wire and PCB trace impedance, local disturbances, and so on. To remove these unwanted components, the signals may have to be filtered. Thus, the control system may include filters for filtering the signals. The filters may be for removing slowly varying DC components of the signal in order to remove any bias from the internal reflection without adding a phase delay. To avoid removing actual signals when at closer distances to objects then the control system may be arranged to detect when objects enter the filtered zone, and to stop the DC component adaptation accordingly.

The radar sensors may be used to provide full three dimensional surveillance, i.e. the control system and its radar sensors are configured to detect objects in each direction along each of three orthogonal axes without the use of other sensors. This approach can be distinguished over alternative radar-based approaches, which may either have limited view in some sectors, no/limited vertical view, or other limitations that give gaps in the surveillance of the environment. The full three dimensional surveillance from the radar sensors may be utilised in combination with creation of a three dimensional map of the local environment using the radar sensor signals. This may be further enhanced by the controller making use of sensor fusion with an inertial measurement system in order to maintain a correct three dimensional map in memory as the drone undergoes translational and rotational motions.

The controller may include appropriate hardware and/or software to carry out its functions. For example the controller may comprise one or more computer algorithms for processing the output signals of the radar sensors, determining position and velocity relative to the objects, and controlling the drone accordingly.

The controller is configured to determine the position and the velocity of the drone relative to the objects based on the output signals of the radar sensors without reference to GPS or other satellite positioning signals. This may involve creating a three dimensional map of the local environment and one or more object(s) in the environment and/or determining of distances to the object(s) or speed of movement of the drone relative to the object(s). The object(s) referred to herein may be any obstacle or feature of the environment, and in particular may include solid objects to be taken account of in the flight path for the drone. This may be in terms of collision avoidance and/or in terms of inspection of the objects or of other items close to the objects and/or obscure by them. It will be appreciated that as a basic principle the control system should allow for the drone to be aware of the surrounding environment and to safely navigate through it. The controller may hence be configured to determine the position and the velocity of the drone relative to the objects in any way required to allow that function.

The controller is also configured to control flight of the drone based on the determined position and velocity. This may include modification of drone flight commands in connection with collision avoidance, position hold and/or automatic flight (for example for contact-based operations). Thus, the controller may be configured to control flight by one or more of: denying flight in directions where there are close obstacles; holding the drone in a required static position relative to the object(s), including optionally in contact with an object; and/or following a flight path in a required mobile relationship relative to the object(s), such as at a set distance from an object or in contact with an object.

The controller may be configured to create a three dimensional map of the local environment and one or more object(s) in the environment and to combine this with three dimensional motion control algorithms in order to prevent collisions with the object(s) in the environment and/or to ensure positioning and motion at a desired fixed distance to structures. Radar range measurements with the radar sensors can be used to reduce inertial navigation errors by using them to compensate for drift in the angular rate sensors and accelerometers.

The control of flight of the drone by the controller may be done in the context or autonomous flights or as assisted flying, where the drone is under the manual control of an operator but this control can be over-ridden or assisted to achieve the required drone operation.

Where a three dimensional map is created then this can be represented digitally for example as an occupancy grid map, point cloud, spherical coordinate grid, or a number of mathematical surfaces/objects. The map can be updated with new measurements during movement of the drone. Advantageously, the updating of the map recognizes that some obstacles will have weaker reflected signal strength when observed from particular angles, and may be invisible by the radar from some drone positions and attitudes (reflected signal weaker than the noise floor). In order to address this issue then previously encountered obstacles may be kept in a memory of the local three dimensional map as long as they are within the maximum range of the radar.

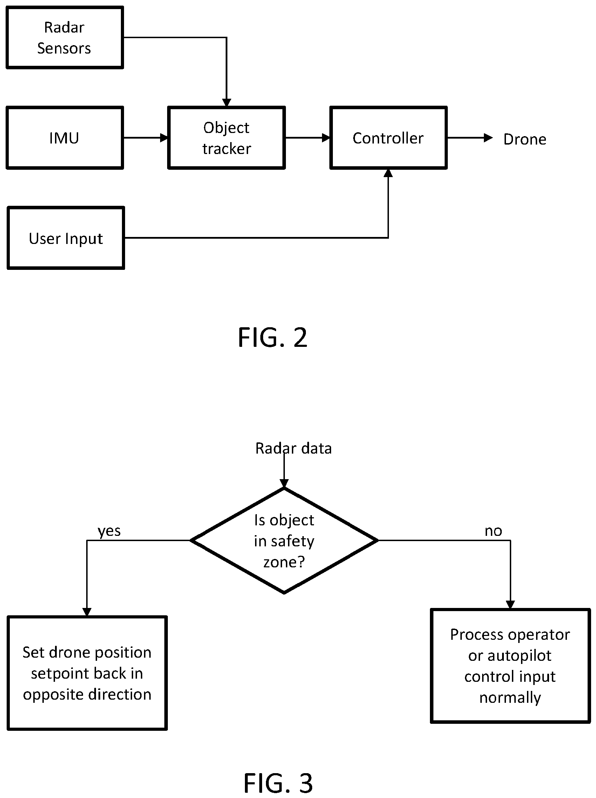

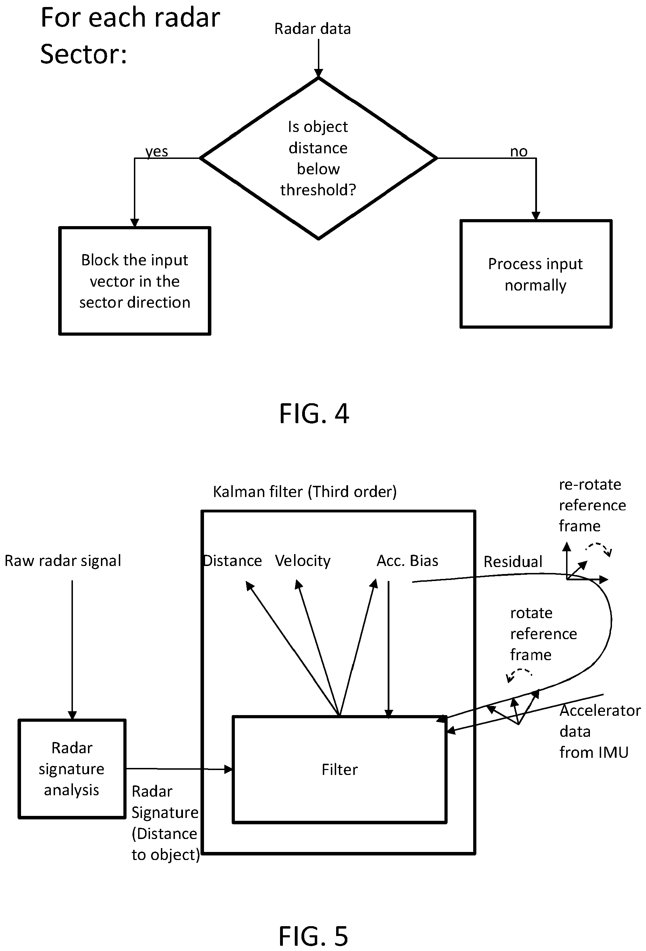

The controller may be configured to control the flight of the drone for collision avoidance as noted above. In one example, based on the estimated distance to the closest obstacles in the different radar sectors, and (optionally) the local three dimensional map, forbidden sectors may be computed in order that collision may be avoided by denying flight in these forbidden sectors, as illustrated in Fig. 4. Denying flight in given sectors can be implemented by the controller modifying the commanded velocity vector so it points in an admissible direction. As noted above, features such as this autonomous collision avoidance function can be used as assistance in manual control mode (e.g. it overrides a pilot command) or in automatic mode (e.g. it overrides a planned mission execution) as illustrated in Fig. 3.

When operating in the vicinity of a structure with a relatively uniform surface (such as a wall, ceiling, or pipe), the controller may be configured to use the radar range measurements to maintain a controlled approximately fixed distance to the surface, while moving freely in admissible directions, such as directions that are parallel (or tangent) to the surface. The controller may be configured to modify the desired velocity vector commanded by the pilot, via a remote control system, or autopilot into directions that keep the radar measurements constant when the drone moves in the admissible directions. The controller may be configured to deny rotation in order to keep a constant attitude towards the structure. Alternatively, the controller may be configured to generate a slewing motion such that the drone constantly points its sensor (e.g. camera) at a fixed point of interest to view it from different positions and relative angles. In one example, fixed distance control is achieved when the smallest of the ranges measured by all the horizontal radars is kept constant by the controller.

For some operations it may be of interest to allow the drone to move very close to a structure and then allow the drone or its payload to be in physical contact with the structure. This includes inspection using sensors that require contact, maintenance or repair using tools, or very close-up sensing. The controller may be configured to allow the drone to have a velocity towards the structure until it reaches the desired close distance or physical contact, and to then deny further reduction of the distance. Upon physical contact, the controller may switch from radar-based distance control to force control using a contact force sensor to maintain a desired contact force between the drone (or its payload) and the structure in order to ensure contact. The contact force sensor could for example measure the deflection of a bumper, arm or other mechanism that is mounted on the drone using e.g. a spring/damper suspension mechanism.

The controller is configured to determine an observed distance of the drone relative to the object(s) based on the output signals of the radar sensors, wherein the IMU is configured to sequentially output accelerometer data, and the drone control system further comprises;
- a third order Kalman filter with bias gain compensation on acceleration, wherein the drone control system is configured for;
- spawning an instance of the Kalman filter for each of the one or more object(s),
- predicting, in a first frame of the Kalman filter, a predicted distance of the object by fusing the observed distance with a first accelerometer data, and
for each consecutive accelerometer data;
- correcting, in a next frame of the Kalman filter, the predicted distance, the predicted velocity and a predicted acceleration bias, by fusing the difference between the predicted and the observed distance with the accelerometer data.

The controller may further have a first frame of reference and the IMU may have a second frame of reference, wherein the drone control system may be configured for;
- rotating the first accelerometer data into the first frame of reference, before predicting the predicted distance, and correcting the predicted distance, predicted velocity and predicted acceleration bias,

Further, the controller may be configured for;
- rotating a residual of a predicted acceleration bias from a previous frame of the Kalman filter into the second frame of reference, and
- correcting, in a next frame of the Kalman filter, predicted acceleration bias, by fusing the difference between the predicted and the observed distance with the accelerometer data and the residual of the predicted acceleration bias.

The Kalman filter may comprise a state representing the observed distance and a state representing the acceleration bias,

The plurality of radar sensors for placement on the drone may be configured to sense the location of one or more object(s) in one, two or three dimensions around the drone.

The location may be along a single axis, or two or three orthogonal axes.

As discussed herein a drone is an unmanned aerial vehicle (UAV) capable of flight in and around facilities as discussed herein, for example flight for the purposes of inspection of industrial facilities. The drone may be a multirotor UAV. The drone may have any type of additional sensor required for the inspection, such as cameras and so on, or the drone may use the radar sensors to gather data for the inspection.

The drone may be included as a part of an inspection system for remote inspection of industrial sites, the inspection system including the drone, a user interface for remote control and/or monitoring of the drone, and a data processing device for logging and/or analysis of data from the drone sensors.

The plurality of radar sensors may be located on the drone so that they together cover all directions in three dimensions around the drone, i.e. radar coverage in each direction along three orthogonal axes, for example up, down, forward, back, left and right, with appropriate definition of those directions relative to an orientation of the drone. The radar sensors may be arranged with sensing axes aligned with such orthogonal axes and/or there may be sensing axes aligned with diagonals in connection with the forward and/or rear directions of the drone, i.e. one or more of forward left, forward right, rearward left and rearward right. Alternatively, there may be more than one radar sensor for at least one axis of the orthogonal axes, such as two sensors with sensing regions covering overlapping areas around the axis. In one example there are at least six radar sensors configured such that there will be at least one sensor located and oriented on the drone to cover each of the six directions along the three orthogonal axes. In another example a smaller number of radar sensors is used but the sensors include rotating radar sensors and/or radar sensors with multiple antennas. Additional sensors may be provided if required, depending on the angle and range covered by each of the sensors.

In some cases the method uses the radar sensors to cover all directions in three dimensions around the drone as well as other sensors that augment the radar sensors. For example, distance measuring sensors such as laser based systems may be used to augment the upward and downward radar sensors. Although the method does not make use of satellite positioning it may be advantageous to augment the use of radar sensors by other sensor types, and so the method may also make use of inertial measurement units, beacon positioning systems such as Ultra Wide Band radio beacons and/or other distance-based measurement such as laser based systems as mentioned above. For example, radio positioning assisted by several beacons may be used to calculate absolute position of the drone and reduce inertial navigation errors due to drift in the angular rate sensors and accelerometers. The method may include performing a suitable fusion of the sensor data.

Using multiple radar sensors on a single vehicle can pose problems in some situations. The method may therefore include steps for mitigating interference between radars. For example, the radar sensors may be placed with an appropriate spatial distribution on the drone, such that emitted beams of each radar sensor are arranged so that signals from a first radar sensor is unlikely to be received by the antenna of a second radar sensor. Alternatively, or additionally, the method may use a temporal distribution of signals to avoid interference. Thus, the transmission time of each radar sensor may be timed so that only one radar sensor transmits pulses at any one time. Alternatively, or additionally, the method may comprise signal separation and coding. In this case, by encoding the emitted beams for each radar sensor with different signals, then the receiver of the radar sensor can identify only the relevant received signals and reject transmissions from other radar sensors.

As explained above, as well as issues arising from interference between multiple radar sensors, there may also be unwanted artefacts in the sensed signals due to internal reflections occurring at certain distances from the radar. The method may include filtering the signals from the radar sensors, for example by removing slowly varying DC components of the signal in order to remove any bias from the internal reflection without adding a phase delay. To avoid removing actual signals when at closer distances to objects then the method may include detecting when objects enter the filtered zone, and stopping the DC component adaptation accordingly.

The radar sensors may be used to provide full three dimensional surveillance, i.e. the method uses the radar sensors (without further sensors being needed) to detect objects in each direction along each of three orthogonal axes without the use of other sensors. The full three dimensional surveillance from the radar sensors may be utilised in combination with creation of a three dimensional map of the local environment using the radar sensor signals. This may be further enhanced by the use of sensor fusion with an inertial measurement system in order to maintain a correct three dimensional map in memory as the drone undergoes translational and rotational motions.

The method may include using appropriate hardware and/or software to carry out the control of the drone. For example the method may use a controller that comprises one or more computer algorithms for processing the output signals of the radar sensors, determining position and velocity relative to the objects, and controlling the drone accordingly.

The method includes determining the position and the velocity of the drone relative to the objects based on the output signals of the radar sensors without reference to GPS or other satellite positioning signals. This may involve creating a three dimensional map of the local environment and one or more object(s) in the environment and/or determining of distances to the object(s) or speed of movement of the drone relative to the object(s). The object(s) referred to herein may be any obstacle or feature of the environment, and in particular may include solid objects to be taken account of in the flight path for the drone. This may be in terms of collision avoidance and/or in terms of inspection of the objects or of other items close to the objects and/or obscure by them. It will be appreciated that as a basic principle the method should allow for the drone to be aware of the surrounding environment and to safely navigate through it. The method may include determining the position and the velocity of the drone relative to the objects in any way required to allow that function.

The method includes controlling flight of the drone based on the determined position and velocity. This may include modification of drone flight commands in connection with collision avoidance, position hold and/or automatic flight (for example for contact-based operations). Thus, the method may include controlling flight by one or more of: denying flight in directions where there are close obstacles; holding the drone in a required static position relative to the object(s), including optionally in contact with an object; and/or following a flight path in a required mobile relationship relative to the object(s), such as at a set distance from an object or in contact with an object.

The method may include creating a three dimensional map of the local environment and one or more object(s) in the environment and to combine this with three dimensional motion control algorithms in order to prevent collisions with the object(s) in the environment and/or to ensure positioning and motion at a desired fixed distance to structures. Radar range measurements with the radar sensors can be used to reduce inertial navigation errors by using them to compensate for drift in the angular rate sensors and accelerometers.

The step of controlling flight of the drone may be done in the context or autonomous flights or as assisted flying, where the drone is under the manual control of an operator but this control can be over-ridden or assisted to achieve the required drone operation.

Where a three dimensional map is created then this can be represented digitally for example as an occupancy grid map, point cloud, spherical coordinate grid, or a number of mathematical surfaces/objects. The map can be updated with new measurements during movement of the drone. Advantageously, the updating of the map recognizes that some obstacles will have weaker reflected signal strength when observed from particular angles, and may be invisible by the radar from some drone positions and attitudes (reflected signal weaker than the noise floor). In order to address this issue then previously encountered obstacles may be kept in a memory of the local three dimensional map as long as they are within the maximum range of the radar.

The method may include controlling the flight of the drone for collision avoidance as noted above. In one example, based on the estimated distance to the closest obstacles in the different radar sectors, and (optionally) the local three dimensional map, forbidden sectors may be computed in order that collision may be avoided by denying flight in these forbidden sectors. Denying flight in given sectors can be implemented by the controller modifying the commanded velocity vector so it points in an admissible direction. As noted above, features such as this autonomous collision avoidance function can be used as assistance in manual control mode (e.g. it overrides a pilot command) or in automatic mode (e.g. it overrides a planned mission execution).

When operating in the vicinity of a structure with a relatively uniform surface (such as a wall, ceiling, or pipe), the method may include using the radar range measurements to maintain a controlled approximately fixed distance to the surface, while moving freely in admissible directions, such as directions that are parallel (or tangent) to the surface. The method may include modifying the desired velocity vector commanded by the pilot, via a remote control system, or autopilot into directions that keep the radar measurements constant when the drone moves in the admissible directions. The method may include denying rotation in order to keep a constant attitude towards the structure. Alternatively, the method may include generating a slewing motion such that the drone constantly points its sensor (e.g. camera) at a fixed point of interest to view it from different positions and relative angles. In one example, fixed distance control is achieved when the smallest of the ranges measured by all the horizontal radars is kept constant by the controller.

For some operations it may be of interest to allow the drone to move very close to a structure and then allow the drone or its payload to be in physical contact with the structure. This includes inspection using sensors that require contact, maintenance or repair using tools, or very close-up sensing. The method may include allowing the drone to have a velocity towards the structure until it reaches the desired close distance or physical contact, and then denying further reduction of the distance. Upon physical contact, the controller may switch from radar-based distance control to force control using a contact force sensor to maintain a desired contact force between the drone (or its payload) and the structure in order to ensure contact. The contact force sensor could for example measure the deflection of a bumper, arm or other mechanism that is mounted on the drone using e.g. a spring/damper suspension mechanism.

### BRIEF DESCRIPTION OF THE DRAWINGS

Fig. 1 illustrates in a perspective view, a drone (10) according to an embodiment of the invention, with radar sensors (11).
Fig. 2 illustrates, in a block diagram, main components of a drone control system according to an embodiment of the invention.
Fig. 3 and 4 illustrate in flow diagrams, decisions that may be taken by the drone control system based on radar data, to obtain safe flight of the drone controlled by the drone control system.
Fig. 5 illustrates in a schematic diagram IMU bias correction according to an aspect of the invention.

### EMBODIMENTS OF THE INVENTION

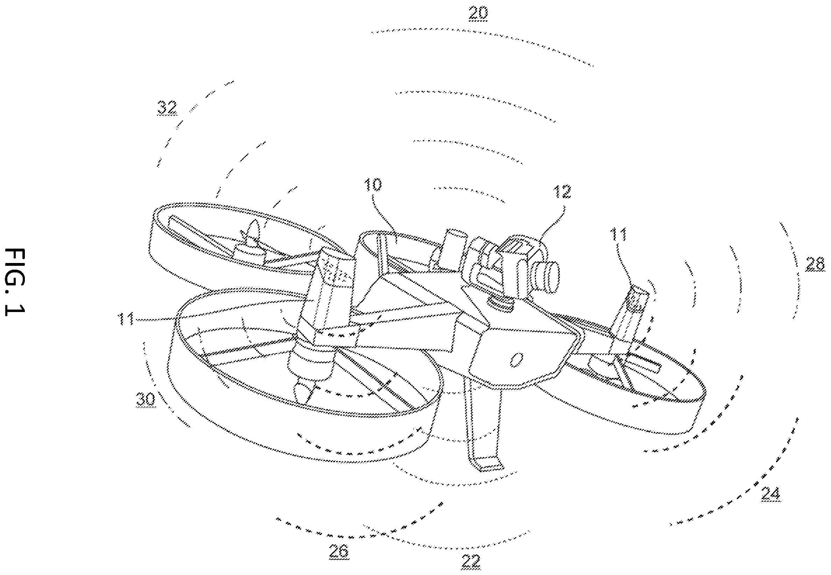

A preferred embodiment of the current invention will now be described by way of example only and with reference to the accompanying Figure 1 , which illustrates a drone along with sensing directions for radar sensors on the drone.

As shown in Figure 1 , a drone 10 in the form of a four rotor multi-rotor UAV is equipped with radar sensors 11 in order to sense objects in a three dimensional environment around the drone 10. The radar sensors 11 may be placed on the drone 10 at any suitable location, for example there may be radar sensors 11 on rotor struts as shown in the Figure in order to sense objects in directions beyond the rotor struts, as well as sensors at an upper and lower part of the body of the robot to sense objects above and below the drone. A typical arrangement might include two antennas pointing forward for better spatial resolution in the forward direction; radars located on the arms in the front, facing forward and to the side; backwards facing radar(s) either on one of the arms or on the UAV body; and radars for up and down sensing located on the UAV body. In particular, in this example, the drone 10 can use radar sensing for detecting objects in two directions along three orthogonal axes, which are aligned with diagonal directions in connection with the front and rear of the drone 10. Thus, radar sensors detect objects by emitting beams in an upward direction 20, a downward direction 22, in diagonals extending forward at the front left 24 and front right 26, outward on the left 28 and right 30 and also rearward 32 of the drone. This allows for increased resolution for objects at the front of the drone. It will also be appreciated that this arrangement could be switched for symmetrically arranged sensors in each of four axes around the drone, including diagonal axes such as forward left, forward right, rearward left and rearward right.

The drone 10 has a controller that is configured to determine a position and a velocity of the drone 10 relative to object(s) in the environment based on the output signals of the radar sensors 11. This is done without reference to GPS or other satellite positioning signals, which enables the drone 10 to operate in environments such as inside storage tanks where there is no reliable satellite signal. The controller is further configured to control flight of the drone 10 based on the determined position and velocity. This can be done as discussed above.

A typical mission for the drone 10 might include a survey of a particular location, which may be carried out as follows:
- The pilot turns on the drone 10 on the ground, and presses start. The drone 10 automatically goes to a prescribed initial altitude (for example, 1 m) by measuring distance to the ground using downwards facing radar.
- The pilot guides the drone 10 towards the inspection point.
- At all times, the drone 10 senses the environment and keeps track of the distance to the nearest environmental detection. This data is used to keep the drone 10 steady.
- If the pilots lets go of the control sticks, the drone 10 is automatically held stationary, without drift.
- The control system guarantees a safety-distance around the drone 10. If the pilot guides the drone 10 too close to an obstacle, the system overrides the pilot's commands in order to prevent collisions, as illustrated in Fig. 3.
- Further, while being guided around, the drone 10 continuously builds up a three dimensional map of known obstacles, to be able to remember the obstacles if being looked at or approached from angles where the obstacles have a low radar signature.

In a modification of this mission for an automated survey;
- A pre-defined flight path is calculated by an external system using knowledge about the environment.
- While the drone 10 is tracking the prescribed path, the drone 10 uses the data from the radars to adjust the flight-path to guarantee collision-free travel if the real environment does not match the environment used for flight planning.

The drone 10 is further equipped with sensors for performing inspection operations. In this example the drone 10 includes a camera 12. This can be used to obtain still images and/or video footage of an object for the purposes of inspecting the object.

Any system using an Inertial Measurement Unit will need to correct the biases of the IMU (for position, most important is the accelerometer) when doing position navigation. Without any corrections, the position estimate may drift quadratically.

By utilizing the fact that the radars have a wide field of view (fov), the radars will see the same object (for instance a wall) at the same distance even if the sensor is tilted a bit. This tilt can come from the natural motion of a multirotor drone as it maneuvers.

With reference to Fig. 5, this may in an embodiment be done by:
- Tracking an object for each radar given the signature in the reflected signal
- A third order linear Kalman filter with bias gain compensation on acceleration is spawned for each object in any direction. The filter internally has a state representing the distance and velocity of the tracked object, along with the accelerometer bias.

The filter takes the signature distance and accelerometer data as input, and outputs the distance and velocity, filtered using data from the accelerometer. Additionally, there is a state to represent the bias of the accelerometer.
- For each new accelerometer data available (may be ten times as fast as the update rate of the radars, or more), an updated distance and velocity of the tracked object is predicted using the accelerometer data.
- Before the accelerometer value is used, it is rotated into the frame of reference of the radar measurement.
- When the same object is detected in the next radar update, we can correct the Kalman Filter using the difference in the predicted and observed distance to the object, i.e., innovation, from the radar, fused with the accelerometer data.
- For each consecutive correction of the bias gain in the filters in each direction, for all tracked objects, the residual is re-rotated back into the original accelerometer orientation frame of reference. This residual is then rotated into the next consecutive filter frame of reference, used as a correction factor, and then the process repeats.

This enables a combined bias estimation in all IMU sensor directions, even if a radar (or laser) in that direction does not have a direct track on an object.

By using radar sensor in all directions, we can use data from all direction simultaneously to update and correct the bias in all three cartesian (x, y, z) directions, which the accelerometers measure along.

## Claims

1. An industrial inspection drone control system, the control system comprising:
a plurality of radar sensors (11) for placement on the drone to sense the location of one or more object(s) in three dimensions around the drone and provide output signals relating to the sensed location of the object(s); and
a controller;
wherein the controller is configured to determine a position and a velocity of the drone relative to the object(s) based on the output signals of the radar sensors (11) and without reference to GPS or other satellite positioning signals; and
wherein the controller is configured to control flight and collision avoidance of the drone based on the determined position and velocity; and
wherein the plurality of radar sensors (11) are configured to be located on the drone so that the location of objects can be sensed in each direction along three orthogonal axes, wherein the drone control system comprises an Inertial Measurement Unit (IMU) configured to sequentially output accelerometer data, wherein the controller is configured to correct the IMU bias, based on tracking of the one or more object(s), wherein the controller is configured to determine an observed distance of the drone relative to the object(s) based on the output signals of the radar sensors (11), wherein the drone control system further comprises
- a third order Kalman filter with bias gain compensation on acceleration, wherein the drone control system is configured for
- spawning an instance of the Kalman filter for each of the one or more object(s),
- predicting, in a first frame of the Kalman filter, a predicted distance of the object by fusing the observed distance with a first accelerometer data, and for each consecutive accelerometer data
- correcting, in a next frame of the Kalman filter, the predicted distance, the predicted velocity and a predicted acceleration bias, by fusing the difference between the predicted and the observed distance with the accelerometer data.

2. The drone control system as claimed in claim 1, wherein the control system is configured to determine the position and the velocity of the drone without reference to magnetic compass readings, i.e. making use of neither of satellite positioning signals or magnetic compass readings.

3. The drone control system as claimed in claim 1 or 2, wherein an inertial navigation system is used along with the radar sensors (11) in order to provide more accurate determination of position and velocity for the drone.

4. The drone control system as claimed in claim 1, wherein the controller has a first frame of reference and the IMU has a second frame of reference, and the drone control system is configured for;
- rotating the first accelerometer data into the first frame of reference, before predicting the predicted distance, and correcting the predicted distance, predicted velocity and predicted acceleration bias,

5. The drone control system as claimed in claim 1 or 4 , where the controller is configured to;
- rotating a residual of a predicted acceleration bias from a previous frame of the Kalman filter into the second frame of reference, and
- correcting, in a next frame of the Kalman filter, predicted acceleration bias, by fusing the difference between the predicted and the observed distance with the accelerometer data and the residual of the predicted acceleration bias.

6. An industrial inspection drone (10) including the control system of any preceding claim.

7. An industrial inspection system for remote inspection of industrial sites, the inspection system including an industrial inspection drone as claimed in claim 6, a user interface for remote control and/or monitoring of the drone, and a data processing device for logging and/or analysis of data from the drone sensors.

8. A method for control of an industrial inspection drone (10), the method comprising:
using a plurality of radar sensors (11) placed on the drone to sense the location of one or more object(s) in three dimensions around the drone and provide output signals relating to the sensed location of the object(s);
determining a position and a velocity of the drone relative to the object(s) based on the output signals of the radar sensors (11) and without reference to GPS or other satellite positioning signals; and
controlling flight and collision avoidance of the drone based on the determined position and velocity, wherein the determining and controlling steps are performed by a controller as in the control system of any of claims 1 to 5 and/or wherein the method includes using a control system as claimed in any of claim 1 to 5.

9. A computer programme product for a controller of a control system for a drone (10), the computer programme product comprising instructions that when executed will configure the controller to operate in accordance with the method of claim 8.

## Patentansprüche

1. Industrielles Steuerungssystem für Inspektionsdrohnen, das Steuerungssystem umfassend:
eine Vielzahl von Radarsensoren (11) zur Platzierung auf der Drohne, um den Standort eines oder mehrerer Objekte in drei Dimensionen um die Drohne herum zu erfassen und Ausgangssignale bereitzustellen, die sich auf den erfassten Standort des Objekts/der Objekte beziehen; und
eine Steuerung;
wobei die Steuerung dazu konfiguriert ist, eine Position und eine Geschwindigkeit der Drohne in Bezug auf das/die Objekt(e) zu bestimmen, basierend auf den Ausgangssignalen der Radarsensoren (11) und ohne Bezug auf GPS- oder andere Satellitenpositionierungssignale; und
wobei die Steuerung dazu konfiguriert ist, den Flug und die Kollisionsvermeidung der Drohne basierend auf der bestimmten Position und Geschwindigkeit zu steuern; und wobei die Vielzahl von Radarsensoren (11) so konfiguriert ist, dass sie auf der Drohne angeordnet sind, sodass die Position von Objekten in jeder Richtung entlang von drei orthogonalen Achsen erfasst werden kann, wobei das Drohnensteuerungssystem eine Trägheitsmesseinheit (IMU) umfasst, die dazu konfiguriert ist, sequentiell Beschleunigungsdaten auszugeben, wobei die Steuerung dazu konfiguriert ist, die IMU-Verzerrung basierend auf der Verfolgung des einen oder der mehreren Objekte zu korrigieren, wobei die Steuerung dazu konfiguriert ist, einen beobachteten Abstand der Drohne in Bezug auf das/die Objekt(e) basierend auf den Ausgangssignalen der Radarsensoren (11) zu bestimmen, wobei das Drohnensteuerungssystem ferner Folgendes umfasst
- einen Kalman-Filter dritter Ordnung mit Verzerrungsverstärkungskompensation bei Beschleunigung, wobei das Drohnensteuerungssystem dazu konfiguriert
- eine Instanz des Kalman-Filters für jedes des einen oder der mehreren Objekte zu erzeugen,
- in einem ersten Rahmen des Kalman-Filters eine vorhergesagte Entfernung zu dem Objekt durch Zusammenführen der beobachteten Entfernung mit ersten Beschleunigungsdaten, und für jeden aufeinanderfolgenden Beschleunigungsdatenwert, vorherzusagen
- in einem nächsten Rahmen des Kalman-Filters die vorhergesagte Entfernung, die vorhergesagte Geschwindigkeit und eine vorhergesagte Beschleunigungsverzerrung durch Sicherung der Differenz zwischen der vorhergesagten und der beobachteten Entfernung mit den Beschleunigungsdaten vorherzusagen.

2. Drohnensteuerungssystem nach Anspruch 1, wobei das Steuerungssystem dazu konfiguriert ist, die Position und die Geschwindigkeit der Drohne ohne Bezug auf magnetische Kompassablesungen zu bestimmen, d. h. weder Satellitenpositionierungssignale noch magnetische Kompassablesungen zu verwenden.

3. Drohnensteuerungssystem nach Anspruch 1 oder 2, wobei ein Trägheitsnavigationssystem zusammen mit den Radarsensoren (11) verwendet wird, um eine genauere Bestimmung einer Position und Geschwindigkeit für die Drohne bereitzustellen.

4. Drohnensteuerungssystem nach Anspruch 1, wobei die Steuerung einen ersten Bezugsrahmen und die IMU einen zweiten Bezugsrahmen aufweist und das Drohnensteuerungssystem dazu konfiguriert ist;
- die ersten Beschleunigungsdaten in den ersten Bezugsrahmen zu drehen, bevor die vorhergesagte Entfernung vorhergesagt wird, und die vorhergesagte Entfernung, die vorhergesagte Geschwindigkeit und die vorhergesagte Beschleunigungsverzerrung zu korrigieren.

5. Drohnensteuerungssystem nach Anspruch 1 oder 4, wobei die Steuerung dazu konfiguriert ist:
- ein Residuum einer vorhergesagten Beschleunigungsverzerrung aus einem vorherigen Rahmen des Kalman-Filters in den zweiten Bezugsrahmen zu drehen, und
- in einem nächsten Rahmen des Kalman-Filters die vorhergesagte Beschleunigungsverzerrung durch Sicherung der Differenz zwischen der vorhergesagten und der beobachteten Entfernung mit den Beschleunigungsdaten und dem Residuum der vorhergesagten Beschleunigungsverzerrung zu korrigieren.

6. Industrielle Inspektionsdrohne (10), beinhaltend das Steuerungssystem nach einem der vorhergehenden Ansprüche.

7. Industrielles Inspektionssystem zur Ferninspektion von Industriestandorten, wobei das Inspektionssystem eine industrielle Inspektionsdrohne nach Anspruch 6, eine Benutzeroberfläche für die Fernsteuerung und/oder Überwachung der Drohne und eine Datenverarbeitungsvorrichtung zur Protokollierung und/oder Analyse von Daten von den Drohnensensoren beinhaltet.

8. Verfahren zum Steuern einer industriellen Inspektionsdrohne (10), das Verfahren umfassend:
Verwenden einer Vielzahl von Radarsensoren (11), die auf der Drohne platziert sind, um den Standort eines oder mehrerer Objekte in drei Dimensionen um die Drohne herum zu erfassen und Ausgangssignale bereitzustellen, die sich auf den erfassten Standort des Objekts/der Objekte beziehen;
Bestimmen einer Position und einer Geschwindigkeit der Drohne in Bezug auf das/die Objekt(e), basierend auf den Ausgangssignalen der Radarsensoren (11) und ohne Bezug auf GPS- oder andere Satellitenpositionierungssignale; und
Steuern des Flugs und der Kollisionsvermeidung der Drohne basierend auf der bestimmten Position und Geschwindigkeit, wobei die Bestimmungs- und Steuerschritte durch eine Steuerung wie in dem Steuerungssystem nach einem der Ansprüche 1 bis 5 durchgeführt werden und/oder wobei das Verfahren das Verwenden eines Steuerungssystems nach einem der Ansprüche 1 bis 5 beinhaltet.

9. Computerprogrammprodukt für eine Steuerung eines Steuerungssystems für eine Drohne (10), wobei das Computerprogrammprodukt Anweisungen umfasst, die, wenn sie ausgeführt werden, die Steuerung zum Betrieb gemäß dem Verfahren nach Anspruch 8 konfigurieren.

## Revendications

1. Système de commande de drone d'inspection industrielle, le système de commande comprenant :
une pluralité de capteurs radar (11) destinés à être placés sur le drone pour détecter l'emplacement d'un ou plusieurs objets en trois dimensions autour du drone et fournir des signaux de sortie se rapportant à l'emplacement détecté de l'objet ou des objets ; et
un dispositif de commande ;
dans lequel le dispositif de commande est configuré pour déterminer une position et une vitesse du drone par rapport à l'objet ou aux objets sur la base des signaux de sortie des capteurs radar (11) et sans référence au GPS ni à d'autres signaux de positionnement par satellite ; et
dans lequel le dispositif de commande est configuré pour commander le vol et la prévention de collisions du drone sur la base de la position et de la vitesse déterminées ; et
dans lequel la pluralité de capteurs radar (11) sont configurés pour être situés sur le drone de sorte que l'emplacement d'objets puisse être détecté dans chaque direction le long de trois axes orthogonaux, dans lequel le système de commande de drone comprend une unité de mesure inertielle (IMU) configurée pour délivrer séquentiellement des données d'accéléromètre, dans lequel le dispositif de commande est configuré pour corriger le biais de l'IMU, sur la base du suivi des un ou plusieurs objets, dans lequel le dispositif de commande est configuré pour déterminer une distance observée du drone par rapport à l'objet ou aux objets, sur la base des signaux de sortie des capteurs radar (11), dans lequel le système de commande de drone comprend en outre
- un filtre de Kalman de troisième ordre avec compensation de gain de biais à l'accélération, dans lequel le système de commande de drone est configuré pour
- la génération d'une instance du filtre de Kalman pour chacun des un ou plusieurs objets,
- la prédiction, dans un premier cadre du filtre de Kalman, d'une distance prédite de l'objet en fusionnant la distance observée avec des premières données d'accéléromètre, et pour chaque donnée d'accéléromètre consécutive
- la correction, dans un cadre suivant du filtre de Kalman, de la distance prédite, de la vitesse prédite et d'un biais d'accélération prédit, en fusionnant la différence entre la distance prédite et la distance observée avec les données d'accéléromètre.

2. Système de commande de drone selon la revendication 1, dans lequel le système de commande est configuré pour déterminer la position et la vitesse du drone sans référence aux lectures du compas magnétique, à savoir en n'utilisant ni les signaux de positionnement par satellite ni les lectures du compas magnétique.

3. Système de commande de drone selon la revendication 1 ou 2, dans lequel un système de navigation inertielle est utilisé conjointement avec les capteurs radar (11) afin de fournir une détermination plus précise de la position et de la vitesse du drone.

4. Système de commande de drone selon la revendication 1, dans lequel le dispositif de commande a un premier cadre de référence et l'IMU a un second cadre de référence, et le système de commande de drone est configuré pour :
- faire tourner les premières données d'accéléromètre dans le premier cadre de référence, avant de prédire la distance prédite, et corriger la distance prédite, la vitesse prédite et le biais d'accélération prédit.

5. Système de commande de drone selon la revendication 1 ou 4, où le dispositif de commande est configuré pour :
- faire tourner un reste d'un biais d'accélération prédit provenant d'un cadre précédent du filtre de Kalman dans le second cadre de référence, et
- corriger, dans un cadre suivant du filtre de Kalman, le biais d'accélération prédit, en fusionnant la différence entre la distance prédite et la distance observée avec les données d'accéléromètre et le reste du biais d'accélération prédit.

6. Drone d'inspection industrielle (10) incluant le système de commande selon une quelconque revendication précédente.

7. Système d'inspection industrielle pour l'inspection à distance de sites industriels, le système d'inspection incluant un drone d'inspection industrielle selon la revendication 6, une interface utilisateur pour la commande et/ou la surveillance à distance du drone, et un dispositif de traitement de données pour l'enregistrement et/ou l'analyse des données provenant des capteurs du drone.

8. Procédé de commande d'un drone d'inspection industrielle (10), le procédé comprenant :
l'utilisation d'une pluralité de capteurs radar (11) placés sur le drone pour détecter l'emplacement d'un ou plusieurs objets en trois dimensions autour du drone et fournir des signaux de sortie se rapportant à l'emplacement détecté de l'objet ou des objets ;
la détermination d'une position et d'une vitesse du drone par rapport à l'objet ou aux objets sur la base des signaux de sortie des capteurs radar (11) et sans référence au GPS ni à d'autres signaux de positionnement par satellite ; et
la commande du vol et de la prévention de collisions du drone sur la base de la position et de la vitesse déterminées, dans lequel les étapes de détermination et de commande sont effectuées par un dispositif de commande comme dans le système de commande selon l'une quelconque des revendications 1 à 5 et/ou dans lequel le procédé inclut l'utilisation d'un système de commande selon l'une quelconque des revendications 1 à 5.

9. Produit programme informatique pour un dispositif de commande d'un système de commande pour un drone (10), le produit programme informatique comprenant des instructions qui, une fois exécutées, configureront le dispositif de commande pour qu'il fonctionne conformément au procédé de la revendication 8.
